# EUROPÄISCHE PATENTSCHRIFT

(11) **EP 1 883 760 B1**
(45) Veröffentlichungstag und Bekanntmachung des Hinweises auf die Patenterteilung: **09.09.2009**
(21) Anmeldenummer: 06707049.0
(22) Anmeldetag: 17.02.2006
(51) Int. Cl.: F16H 48/00, F16H 48/08

(54) **DIFFERENTIALANORDNUNG MIT LAGERSCHEIBEN IN MONTAGEÖFFNUNGEN**
DIFFERENTIAL ARRANGEMENT WITH BEARING PLATES IN ASSEMBLY OPENINGS
SYSTEME DIFFERENTIEL POURVU DE DISQUES DE BUTEE DE PALIER INSTALLES DANS DES OUVERTURES DE MONTAGE

(30) Priorität: 24.05.2005 DE 102005024456
(43) Veröffentlichungstag der Anmeldung: 06.02.2008
(73) Patentinhaber: GKN Driveline International GmbH, 53797 Lohmar (DE)
(72) Erfinder: KRUDE, Werner, 53819 Neunkirchen-Seelscheid (DE); LEUSCHEN, Ralf, 54578 Oberbettingen (DE); ENGELMANN, Michael, 53757 St. Augustin (DE)
(74) Vertreter: Oberwalleney, Stephan
(86) Internationale Anmeldenummer: PCT/EP2006/001460
(87) Internationale Veröffentlichungsnummer: WO 2006/125480

(56) Entgegenhaltungen:
- WO-A-20/05038306
- DE-A1- 10 144 200
- DE-A1- 10 308 800
- DE-A1- 19 820 206
- DE-A1- 19 937 104

## Beschreibung

Die Erfindung betrifft eine Differentialanordnung, die Teil eines Differentialgetriebes ist und insbesondere zum Einsatz im Antriebsstrang eines Kraftfahrzeugs dient. Derartige Differentialanordnungen sind hinreichend bekannt. Sie umfassen üblicherweise einen Differentialkorb, der um eine Drehachse drehend antreibbar ist, zwei Seitenwellenräder, die in dem Differentialkorb drehbar gehalten sind und zur Drehmomentübertragung auf zwei Seitenwellen dienen, sowie mehrere Ausgleichsräder, die gemeinsam mit dem Differentialkorb umlaufen und mit den Seitenwellenrädern in Verzahnungseingriff sind.

Aus der DE 198 54 215 A1 ist eine Differentialanordnung mit integrierten Gleichlaufgelenken und einem mehrteiligen Differentialkorb bekannt. Der Differentialkorb umfaßt ein zylinderförmiges Korbteil, das nach der Montage des Rädersatzes mittels zweier Deckelteile verschlossen wird.

Aus der gattungsgemäßen DE 101 44 200 A1 ist eine Differentialanordnung in Form eines Kronenraddifferentials bekannt. Der Differentialkorb ist einteilig ausgeführt und im wesentlichen zylinderförmig gestaltet. Axial mittig hat der Differentialkorb vier gleichmäßig über den Umfang verteilte Öffnungen zur Montage der Ausgleichsräder. In zwischen den Öffnungen gebildeten Stegen sind radial nach innen gerichtete Rippen angeformt, die mit einem Zapfenelement verbunden sind. Die Zapfen ragen jeweils in die vier Öffnungen hinein und haben an ihren Enden Ringnuten, in die Axialsicherungsringe zum Fixieren der Ausgleichsräder eingreifen. An den Enden des Differentialkorbs sind die Kronenräder eingesetzt und mittels großer Axialsicherungsringe im Differentialkorb abgestützt.

Aus der US 5 951 431 ist eine Differentialanordnung in Form eines Kegelraddifferentials mit einem einteiligen Differentialkorb bekannt. Zur Montage des Rädersatzes hat der Differentialkorb zwei einander gegenüberliegende Montageöffnungen, die von der Kreisform abweichen und in Bezug auf eine Längsmittelebene und eine Querschnittsebene unsymmetrisch gestaltet sind. In Umfangsrichtung sind zwischen den Öffnungen sind Bohrungen vorgesehen, in die nach dem Einsetzen des Rädersatzes ein Zapfenteil zum Lagern der zwei kegeligen Ausgleichsräder eingesteckt wird.

Aus der WO 2005/0383306 A1 ist eine Differentialanordnung bekannt, die einen zweiteiligen Differentialkorb umfaßt, mit zur Drehachse koaxialen Hülsenansätzen zur Aufnahme von Wälzlagern zur Lagerung des Korbs. Im einem Korbteil sind in radialer Überdeckung mit den Wälzlagern axiale Durchbrüche zum Eintritt von Schmiermittel vorgesehen.

Grundsätzlich erfordern einteilige Differentialkörbe verhältnismäßig große Öffnungen im Mantelabschnitt zur Montage der Seitenwellenräder und Ausgleichsräder. Diese haben eine Verminderung der Steifigkeit des Differentialkorbs zur Folge. Weiterhin wird der differentialkorb auch durch die zwischen den Montageöffnungen liegenden Bohrungen zur Aufnahme der Zapfen geschwächt.

Hiervon ausgehend liegt der vorliegenden Erfindung die Aufgabe zugrunde, eine Differentialanordnung vorzuschlagen, die eine hohe Festigkeit und Verdrehsteifigkeit aufweist und kompakt aufgebaut ist.

Diese Aufgabe wird erfindungsgemäß durch eine Differentialanordnung in Form eines Kronenraddifferentials, insbesondere zum Einsatz im Antriebsstrang eines Kraftfahrzeugs gelöst, umfassend
einen einteiligen Differentialkorb, der um eine Drehachse (A) drehend antreibbar ist und in einem Mantelabschnitt zwei radiale Öffnungen zur Montage von Seitenwellenrädern und Ausgleichsrädern aufweist, wobei - in montiertem Zustand - die Seitenwellenräder im Differentialkorb auf der Drehachse (A) drehbar gehalten sind und die Ausgleichsräder gemeinsam mit dem Differentialkorb um die Drehachse (A) umlaufen und mit den Seitenwellenrädern in Verzahnungseingriff sind; und
je Öffnung eine in diese eingesetzte Lagerscheibe mit einer zentralen Bohrung, in der jeweils ein Zapfenende eines Lagerzapfens für ein Ausgleichsrad gehalten ist, dadurch gekennzeichnet daß die Öffnungen in Bezug auf eine durch den Zapfen und senkrecht zur Drehachse aufgespannte Querschnittsebene unsymmetrisch und in Bezug auf eine Längsmittelebene symmetrisch gestaltet sind.

Durch die Anordnung der Lagerscheiben in den Montageöffnungen ergibt sich eine hohe Verdrehsteifigkeit und Festigkeit des Differentialkorbs, da die Lagerscheiben eine aussteifende Wirkung in Umfangsrichtung aufweisen. Es sind lediglich zwei Öffnungen erforderlich, durch die sowohl die Ausgleichsräder als auch die Seitenwellenräder in den Differentialkorb eingesetzt werden. Durch die Ausgestaltung als Kronenraddifferential ergibt sich eine kurze axiale Baulänge der Differentialanordnung mit einem verhältnismäßig geringen Gewicht. Vorzugsweise sind die beiden Öffnungen um 180° umfangsversetzt zueinander angeordnet, wobei der Differentialkorb in Umfangsrichtung zwischen den beiden Öffnungen gebildeten Stegen durchbruchfrei gestaltet ist Dies gilt für die Verwendung von vorzugsweise zwei Ausgleichsrädern, wobei sich eine besonders hohe Verdrehsteifigkeit des Differentialkorbs erreicht wird.

Die Lagerscheiben sind nach einer bevorzugten Ausgestaltung zumindest in Umfangsrichtung des Differentialkorbs gegenüber diesem spielfrei gehalten. So wird eine spielfreie Übertragung des eingeleiteten Drehmoments von dem Differentialkorb auf die Lagerscheiben und die hiermit verbundene Zapfenanordnung gewährleistet. Vorzugsweise hat der Differentialkorb an jeder der Öffnungen zwei einander in Umfangsrichtung gegenüberliegende Stützflächen, mit der die zugehörige Lagerscheibe in montiertem Zustand spielfrei in Anlage ist. Um eine in Umfangsrichtung gerichtete Krafteinleitung vom Differentialkorb in die Lagerscheiben zu erreichen, liegen die Stützflächen auf einer Querschnittsebene durch die Zapfenachse bzw. grenzen unmittelbar an diese an. Es ist günstig, wenn die Lagerscheibe an weiteren Punkten mit dem Differentialkorb in Kontakt ist. Beispielsweise kann die Form der Öffnung im Verhältnis zu der Lagerscheibe so gestaltet werden, daß sich in Radialansicht ein Dreipunktkontakt oder Vierpunktkontakt über den Umfang der Lagerscheibe ausbildet. Vorzugsweise ist in zwischen den Kontaktpunkten liegenden Umfangsteilabschnitten zwischen der Lagerscheibe und der Öffnung Spalte gebildet, damit die Fertigurigstoleranzen hier grob gehalten werden können. Dies wirkt sich günstig auf die Fertigungskosten aus. Nach einer bevorzugten Ausgestaltung sind die Lagerscheiben kreisscheibenförmig gestaltet, wobei andere Formen nicht ausgeschlossen sind.

Um unerwünschte Unwuchten zu vermeiden, sind die beiden Öffnungen gleich gestaltet. Weiterhin sind die Öffnungen in Bezug auf die Längsmittelebene vorzugsweise symmetrisch gestaltet. In Bezug auf eine senkrecht zur Drehachse angeordneten Querschnittsebene sind die Öffnungen unsymmetrisch gestaltet, um deren Fläche zu minimieren. Die Öffnungen sind vorzugsweise durch Überdeckung zweier Flächen gebildet, von denen eine erste Fläche einen Kreis einbeschreibt und von denen eine zweite Fläche größer ist als eine radiale Projektion der Seitenwellenräder. Der durch die erste Fläche einbeschriebene Kreis entspricht in Radialansicht etwa dem Außenumfang der Lagerscheiben. Die zweite Fläche ist vorzugsweise in Form eines sich in Umfangsrichtung erstreckenden Schlitzes gestaltet. Der Schlitz entspricht hinsichtlich seiner Form etwa der Radialprojektion der beiden Seitenwellenräder und ist gerade so groß gestaltet, daß die beiden Seitenwellenräder jeweils in ihrer Betriebsposition ausgerichtet in den Differentialkorb eingefädelt werden können. In Konkretisierung ist vorgesehen, daß der Differentialkorb einen einstückig angeformten Flansch zur Drehmomenteinleitung aufweist, wobei der Schlitz in Bezug auf die Querschnittsebene vom Flansch entfernt angeordnet ist. Hierdurch wird vorteilhaft erreicht, daß der Bereich der Drehmomentübertragung des Differentialkorbs zwischen dem Flansch und den in Umfangsrichtung liegenden Kontaktflächen der Lagerscheibe nur einer minimalen Schwächung unterliegt. Hierdurch wird eine besonders hohe Steifigkeit erreicht.

Die Zapfen der Zapfenanordnung sind in die Bohrungen der einander gegenüberliegenden Lagerscheiben eingesteckt und gegenüber diesen axial fixiert, vorzugsweise mittels Sicherungsringen, die in Ringnuten der Zapfen eingreifen. Nach einer bevorzugten Ausgestaltung mit genau zwei Ausgleichsrädern hat der Zapfen in einem zentralen Bereich Abflachungen, in die mit den Seitenwellenrädern antriebsverbindbare Seitenwellen zur Verdrehsicherung eingreifen können. So wird verhindert, daß sich der Zapfen relativ zu den Lagerscheiben dreht.

Bevorzugte Ausführungsbeispiele der erfindungsgemäßen Differentialanordnung werden nachfolgend anhand der Zeichnung erläutert. Hierin zeigt
- Figur 1: eine erfindungsgemäße Differentialanordnung in einer ersten Ausführungsform im Längsschnitt;
- Figur 2: die Differentialanordnung aus Figur 1 im Querschnitt durch die Montageöffnung mit einem abgewandelten Zapfen;
- Figur 3: die Differentialanordnung aus Figur 1 in Radialansicht auf die Montageöffnung;
- Figur 4: eine erfindungsgemäße Differentialanordnung in einer zweiten Ausführungsform in Radialansicht auf die Montageöffnung;
- Figur 5: eine erfindungsgemäße Differentialanordnung in einer dritten Ausführungsform in Radialansicht auf die Montageöffnung;

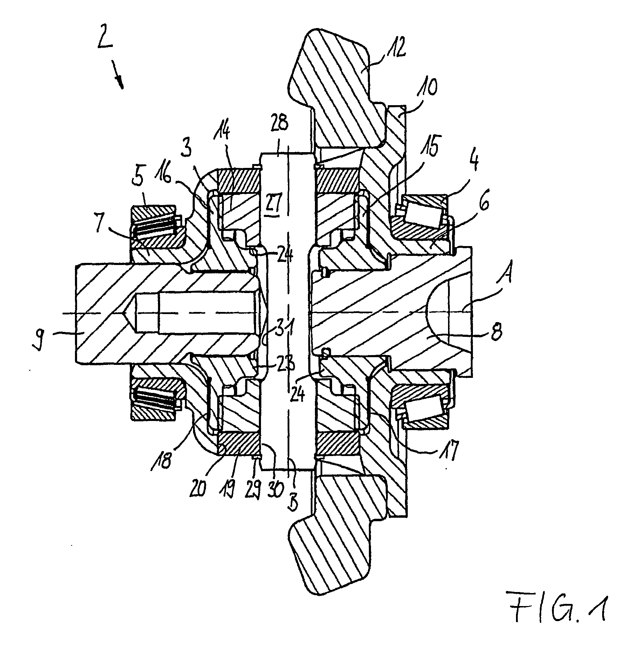

Die Figuren 1 bis 3 werden im folgenden gemeinsam beschrieben. Es ist eine Differentialanordnung 2 mit einem einteiligen Differentialkorb 3 gezeigt, der in einem nicht dargestellten stehenden Gehäuse zu lagern ist. Hierfür sind zwei Wälzlager 4, 5 vorgesehen, die zwei in entgegengesetzte Richtung weisenden hülsenförmigen Lageransätzen 6, 7 des Differentialkorbs 3 aufnehmen. Der Differentialkorb 3 ist einstückig als Gußteil hergestellt, so daß er eine hohe Steifigkeit aufweist. Die Differentialanordnung 2 ist Teil eines Differentialgetriebes im Antriebsstrang eines Kraftfahrzeugs und dient zur Drehmomentübertragung von einer nicht dargestellten Längsantriebswelle auf zwei Seitenwellen 8, 9. Hierfür ist an den Differentialkorb 3 ein Flansch 10 angeformt, an dem ein Tellerrad 12 zum Einleiten des Drehmoments in die Differentialanordnung 2 befestigt ist. Das eingeleitete Drehmoment wird über mehrere auf einem Zapfen 27 drehbar gelagerte und gemeinsam mit dem Differentialkorb 3 umlaufende Ausgleichsräder 14 auf mit diesen kämmende Seitenwellenräder 15, 16 übertragen. Die Seitenwellenräder 15, 16 sind gegenüber dem Differentialkorb 3 üblicherweise mittels reibmindernder Anlaufscheiben 17, 18 axial abgestützt.

Die Differentialanordnung 2 ist in Form eines Kronenraddifferentials gestaltet, wobei die Seitenwellenräder 15, 16 als Kronenräder und die Ausgleichsräder 14 als Stirnräder gestaltet sind. Hierdurch ergibt sich ein kompakter Aufbau und ein geringes Gewicht. Bei Kronenraddifferentialen ist die Kronenradverzahnung der Seitenwellenräder 15, 16 radial in Richtung zur Drehachse A ausgerichtet und die Stirnradverzahnung der Ausgleichsräder 14 ist parallel zur Zapfenachse B ausgerichtet. Daher können die Ausgleichsräder 14 prinzipiell auf den Zapfenachsen B radial wandern. Bei Rotation der Differentialanordnung 2 werden die Ausgleichsräder 14 aufgrund von Fliehkräften nach radial außen beschleunigt und laufen gegen Lagerscheiben 19 an, die in Montageöffnungen 20 in einem Mantelabschnitt 25 des Differentialkorbs 3 eingesetzt sind. Um bei zu geringen Drehzahlen zu verhindern, daß die Ausgleichsräder 14 nach radial innen zur Drehachse A wandern, haben die Seitenwellenräder 15, 16 in Richtung zur Zapfenachse B gerichtete axiale Vorsprünge 22, 23, gegen die die Ausgleichsräder 14 mit entsprechenden Anlageflächen 24 anlaufen können.

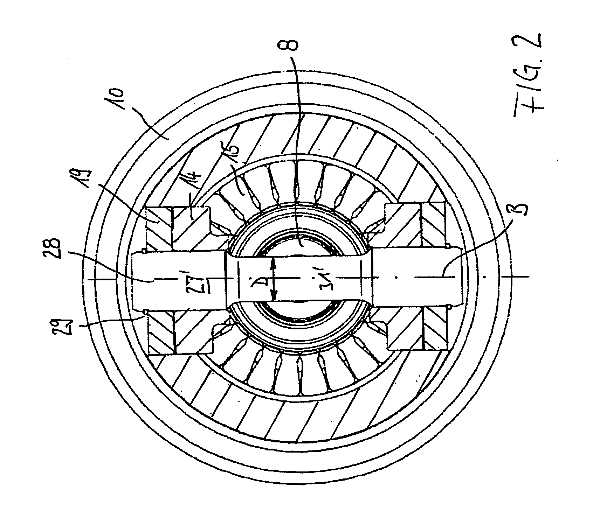

Die beiden Öffnungen 20 liegen einander diametral gegenüber, haben eine gleiche Kontur und sind jeweils in Bezug auf die Längsmittelebene symmetrisch gestaltet, um unerwünschte Unwuchten zu vermeiden. Jede der Öffnungen 20 ist gerade groß genug, um die Seitenwellenräder 15, 16 und die Ausgleichsräder 14 in den Differentialkorb 3 einzusetzen. Die in Umfangsrichtung zwischen den Öffnungen 20 gebildeten Stege 26 sind durchbruchfrei gestaltet. In den Montageöffnungen 20 sitzen die kreisscheibenförmigen Lagerscheiben 19 spielfrei ein, so daß das in den Differentialkorb 3 eingeleitete Drehmoment spielfrei auf die Lagerscheiben 19 und von dort auf den Zapfen 27 übertragen wird. Der Zapfen 27 ist mit seinen Zapfenenden 28 jeweils in eine Bohrung 30 der einander gegenüberliegenden Lagerscheiben 19 eingesteckt. In den Zapfenenden 28 sind Ringnuten vorgesehen, in die jeweils ein Sicherungsring 29 zum Festlegen des Zapfens 27 gegenüber den Lagerscheiben 19 eingreift. Bei der in Figur 1 gezeigten Ausführungsform hat der Zapfen 27 in einem zentralen Abschnitt seitliche Abflachungen 31, in die die mit den Seitenwellenrädern 15, 16 drehfest verbundenen Seitenwellen 8, 9 eingreifen können. So wird der Zapfen 27 gegenüber den Lagerscheiben 19 drehgesichert. Nach einer hierzu alternativen Ausgestaltung, die in Figur 2 gezeigt ist, ist der Zapfen 27' rotationssymmetrisch und hat einen zentralen Abschnitt 31' mit kreisrundem Querschnitt, der gegenüber den Lagerabschnitten einen reduzierten Durchmesser D hat. Bei dieser Ausgestaltung wären andere Mittel zur Verdrehsicherung vorzusehen.

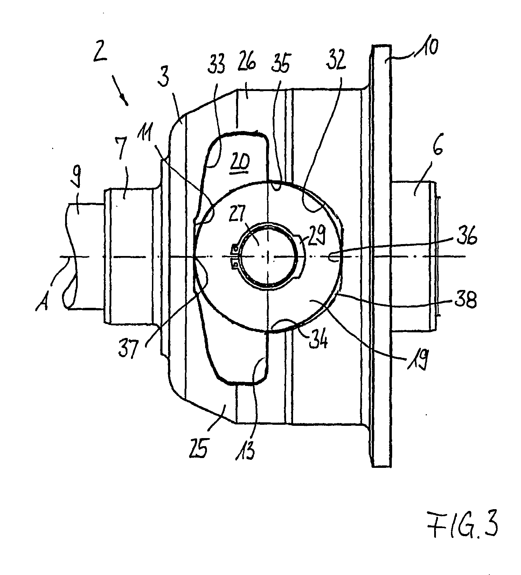

Es ist insbesondere aus Figur 3 ersichtlich, daß die Öffnungen 20 durch Überdekkung zweier Flächen gebildet sind, von denen eine erste Fläche 32 einen Kreis einbeschreibt und von denen eine zweite Fläche 33 größer ist als eine radiale Projektion der Seitenwellenräder 15, 16. Der durch die erste Fläche 32 einbeschriebene Kreis entspricht in Radialansicht etwa dem Außenumfang der Lagerscheiben 19. Die zweite Fläche 33 ist im wesentlichen in Form eines sich in Umfangsrichtung erstreckenden Schlitzes gestaltet, der eine zum Flansch 10 parallele Grundfläche 13 aufweist, die in einer durch die Zapfenachse B aufgespannten Querschnittsebene liegt. Der Schlitz 33 entspricht hinsichtlich seiner Form etwa der Radialprojektion der beiden Seitenwellenräder 15, 16 und ist gerade so groß gestaltet, daß die beiden Seitenwellenräder 15, 16 jeweils in ihrer Betriebsposition ausgerichtet in den Differentialkorb 3 eingefädelt werden können. Übergangsbereiche zwischen der Grundfläche 13 und einer radialen Kopffläche 11 des Schlitzes 33 sind durch Radien gebildet, um Kerbwirkung zu vermeiden und eine hohe Steifigkeit zu erreichen.

Die beiden Flächen 32, 33 sind so angeordnet, daß die Öffnung 20 in einem Bereich zwischen einer durch den Zapfen 27 aufgespannten Querschnittsebene und einem an den Differentialkorb 3 einstückig angeformten Flansch 30 nur durch die kreisförmige erste Fläche 32 gebildet ist. Das heißt, der Schlitz 33 ist in Bezug auf die Querschnittsebene vom Flansch 30 entfernt angeordnet. So ist der Bereich der Kraftübertragung zwischen dem Flansch und den Kontaktstellen zur Lagerscheibe 19 nur einer minimalen Schwächung unterworfen. Die Kontaktstellen sind durch zwei in Umfangsrichtung einander gegenüberliegende Stützflächen 34, 35 gebildet, gegen die die Lagerscheibe 19 abgestützt ist. Über die Stützflächen 34, 35 wird das Drehmoment vom Differentialkorb auf die Lagerscheibe 19 übertragen, und zwar in der durch den Zapfen 19 aufgespannten Querschnittsebene. So wird vorteilhaft erreicht, daß die durch das Drehmoment erzeugten Kräfte rein in Umfangsrichtung wirken und keine Axialkraftkomponente aufweisen. Bei der in Figur 3 gezeigten Ausführungsform ist die Lagerscheibe 19 in Radialansicht an insgesamt vier Punkten 34, 35, 36, 37 abgestützt, von denen sich jeweils zwei in Umfangsrichtung und zwei in axiale Richtung gegenüberliegen. Dabei sind die Toleranzen so gewählt, daß an den Kontaktpunkten 34, 35, 36, 37 eine leichte Preßpassung zwischen den Lagerscheiben 19 und dem Differentialkorb 3 vorliegt. In zwischen den Kontaktpunkten 34, 35, 36, 37 liegenden Umfangsteilabschnitten zwischen der Lagerscheibe 19 und der Öffnung 20 sind Spalte 38 gebildet, so daß die Fertigungstoleranzen hier grob gehalten werden können.

Im folgenden wird der Montageablauf der Seitenwellenräder 15, 16 und der Ausgleichsräder 14 in den Differentialkorb 3 beschrieben. Es wird zunächst das benachbart zum Flansch 10 liegende Seitenwellenrad 15 in die Öffnung 20 eingeführt und axial verschoben, bis es mit seiner radialen Anlagefläche mit der Anlaufscheibe 17 in Kontakt ist. Danach wird das zum Flansch 10 entfernt liegende Seitenwellenrad 16 in die Öffnung 20 eingeführt und mit seiner Anlagefläche gegen die Anlaufscheibe 18 in Anlage gebracht. Dabei werden die Seitenwellenräder 15, 16 mit ihren jeweiligen Achsen etwa parallel zur Drehachse A ausgerichtet ohne seitliches Verkippen in den Differentialkorb 3 eingeführt. Anschließend werden die beiden Ausgleichsräder 14 mit ihren jeweiligen Achsen etwa senkrecht zur Drehachse A ausgerichtet durch die Öffnungen 20 in den Differentialkorb 3 eingeführt und mit den beiden Seitenwellenrädern 15, 16 in Verzahnungseingriff gebracht. Im nächsten Schritt werden die Lagerscheiben 19 in die Öffnungen 20 eingesetzt. Dann wird der Zapfen 27 durch die Bohrungen 30 der Lagerscheiben 19 und die Ausgleichsräder 14 eingesteckt und mittels der Sicherungsringe 29 gegenüber den Lagerscheiben 19 axial gesichert.

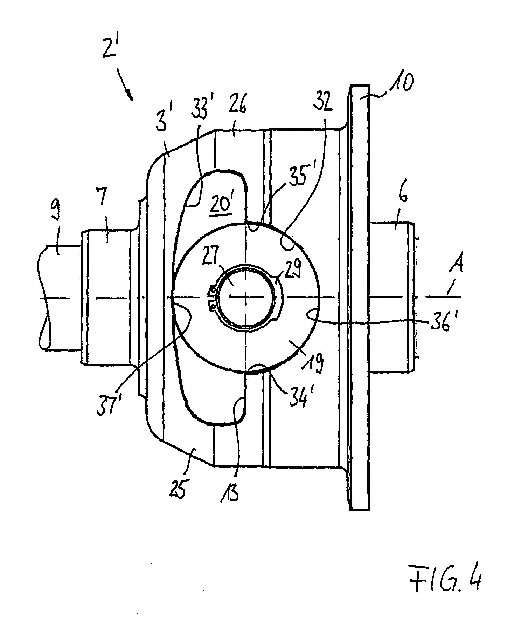

Figur 4 zeigt eine alternative Ausführungsform einer erfindungsgemäßen Differentialanordnung 2'. Diese entspricht hinsichtlich ihres Aufbaus weitestgehend derjenigen aus den Figuren 1 bis 3, weswegen auf obige Beschreibung Bezug genommen wird. Dabei sind gleiche Bauteile mit gleichen Bezugsziffern und abgewandelte Bauteile mit gestrichenen Indizes versehen. Im Unterschied zu der obigen Ausführungsform ist die Öffnung 20' der vorliegenden Differentialanordnung 2' dahingehend abgewandelt, daß die erste Fläche 32' durch einen Halbkreis gebildet ist. Der Halbkreis hat einen Radius, der dem Radius der Lagerscheibe 19 entspricht. So ist ein Flächenkontakt 34', 35', 36' zwischen der Lagerscheibe 19 und dem Differentialkorb 3' im Bereich zwischen der Querschnittsebene und dem Flansch 10 gebildet, was zu einer höheren Steifigkeit führt. Die schlitzartige zweite Fläche 33' der Öffnung 20' ist an ihrer dem Flansch 10 entfernten Seite durch drei Radien gebildet und hat einen zentralen Stützabschnitt 37'. Dabei entspricht der Radius des zentralen Stützabschnitts 37' dem Radius der Lagerscheibe 19, so daß diese flächig gegen den Stützabschnitt 37' anliegt. Auch bei dieser Ausführungsform sind die Toleranzen so gewählt, daß die Lagerscheiben 19 mit leichter Übermaßpassung in die jeweilige Öffnung 20' eingesetzt sind.

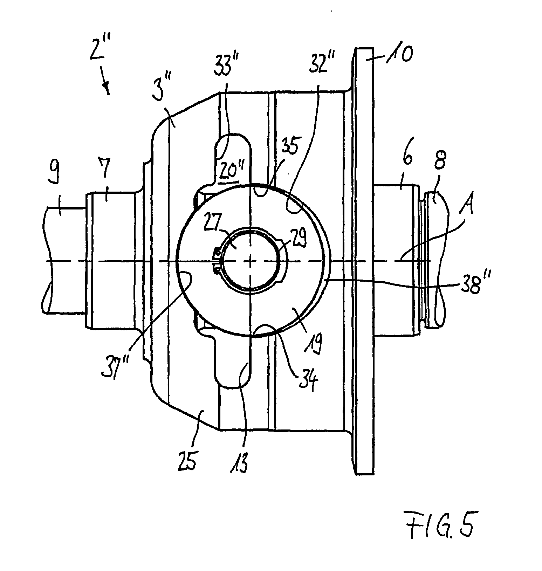

Figur 5 zeigt eine weitere Ausführungsform einer erfindungsgemäßen Differentialanordnung 2". Diese entspricht hinsichtlich ihres Aufbaus weitestgehend derjenigen aus den Figuren 1 bis 3. Insofern wird auf die obige Beschreibung Bezug genommen, wobei gleiche Bauteile mit gleichen Bezugsziffern und abgewandelte Bauteile mit um zwei gestrichenen Indizes versehen sind. Im Unterschied zu den obigen Ausführungsformen ist die Lagerscheibe 19 bei der vorliegenden Differentialanordnung 2" gegenüber dem Differentialkorb 3" im Bereich zwischen den beiden Stützflächen 34, 35 nicht abgestützt. Es ist ein sichelförmiger Spalt 38" zwischen der Lagerscheibe 19 und dem Differentialkorb 3" vorgesehen, so daß in diesem Bereich die Fertigungstoleranzen grob gehalten werden können. Die Stützflächen 34, 35, die die Lagerscheibe 19 in einer zur Drehachse A senkrechten Ebene durch die Zapfenachse B berühren, können in einem ersten Bereich achsparallel gestaltet sein, bevor sie in den daran anschließenden konkaven Bereich übergehen. Die schlitzartige zweite Fläche 33" der Öffnung 20" entspricht in Radialansicht betrachtet einer Radialprojektion des flanschseitig einzusetzenden Seitenwellenrads 15, wobei Übergangsbereiche durch Radien abgerundet sind. Ein axial vom Flansch 10 entfernt liegender Stützabschnitt 37" ist durch einen Radius gebildet, der dem Radius der Lagerscheibe 19 entspricht. So liegt die Lagerscheibe in diesem Bereich flächig gegen den Stützabschnitt 37" an. In axial entgegengesetzter Richtung, d. h. in Richtung zum Flansch 10, wird die Lagerscheibe 19 unmittelbar über den Zapfen 27, das Ausgleichsrad 14 und das hiermit kämmende Seitenwellenrad 15 gegen den Differentialkorb 3" abgestützt. So wird die Lagerscheibe 19 auch ohne zusätzlichen axialen Kontaktpunkt gegenüber dem Differentialkorb 3" axial gehalten. Die Toleranzen sind in den Kontaktbereichen 34, 35, 37" so gewählt, daß die Lagerscheiben 19 mit leichter Übermaßpassung in die jeweilige Öffnung 20" eingesetzt sind.

### Bezugszeichenliste

- 2: Differentialanordnung
- 3: Differentialkorb
- 4: Wälzlager
- 5: Wälzlager
- 6: Lageransatz
- 7: Lageransatz
- 8: Seitenwelle
- 9: Seitenwelle
- 10: Flansch
- 11: Kopffläche
- 12: Tellerrad
- 13: Grundfläche
- 14: Ausgleichsrad
- 15: Seitenwellenrad
- 16: Seitenwellenrad
- 17: Anlaufscheibe
- 18: Anlaufscheibe
- 19: Lagerscheibe
- 20: Öffnung

- 22: Vorsprung
- 23: Vorsprung
- 24: Anlagefläche
- 25: Mantelfläche
- 26: Steg
- 27: Zapfen
- 28: Zapfenende
- 29: Sicherungsring
- 30: Bohrung
- 31: Abflachungen
- 32: erste Fläche
- 33: zweite Fläche
- 34: Stützfläche
- 35: Stützfläche
- 36: Kontaktpunkt
- 37: Kontaktpunkt
- 38: Spalt

- A: Drehachse
- B: Zapfenachse
- D: Durchmesser

## Patentansprüche

1. Differentialanordnung (2) in Form eines Kronenraddifferentials, insbesondere zum Einsatz im Antriebsstrang eines Kraftfahrzeugs, umfassend
einen einteiligen Differentialkorb (3), der um eine Drehachse (A) drehend antreibbar ist und in einem Mantelabschnitt (25) zwei radiale Öffnungen (20) zur Montage von Seitenwellenrädern (15, 16) und Ausgleichsrädern (14) aufweist, wobei - in montiertem Zustand - die Seitenwellenräder (15, 16) im Differentialkorb (3) auf der Drehachse (A) drehbar gehalten sind und die Ausgleichsräder (14) gemeinsam mit dem Differentialkorb (3) um die Drehachse (A) umlaufen und mit den Seitenwellenrädern (15, 16) in Verzahnungseingriff sind; und je Öffnung (20) eine in diese eingesetzte Lagerscheibe (19) mit einer zentralen Bohrung (30), in der jeweils ein Zapfenende (28) eines Lagerzapfens (27) für ein Ausgleichsrad (14) gehalten ist,
**dadurch gekennzeichnet,**
**daß** die Öffnungen (20) in Bezug auf eine durch den Zapfen (27) und senkrecht zur Drehachse (A) aufgespannte Querschnittsebene unsymmetrisch und in Bezug auf eine Längsmittelebene symmetrisch gestaltet sind.

2. Differentialanordnung nach Anspruch 1,
**dadurch gekennzeichnet,**
**daß** der Differentialkorb (3) in Umfangsrichtung zwischen den beiden Öffnungen (20) gebildeten Stegen (26) durchbruchfrei gestaltet ist.

3. Differentialanordnung nach Anspruch 1 oder 2,
**dadurch gekennzeichnet,**
**daß** die Lagerscheiben (19) zumindest in Umfangsrichtung des Differentialkorbs (3) gegenüber diesem spielfrei gehalten sind.

4. Differentialanordnung nach einem der Ansprüche 1 bis 3,
**dadurch gekennzeichnet,**
**daß** der Differentialkorb (3) an jeder der Öffnungen (20) zwei einander in Umfangsrichtung gegenüberliegende Stützflächen (34, 35) aufweist, mit der die zugehörige Lagerscheibe (19) in montiertem Zustand spielfrei in Anlage ist.

5. Differentialanordnung nach Anspruch 4,
**dadurch gekennzeichnet,**
**daß** die zwei Stützflächen (34, 35) auf einer zur Längsachse (A) senkrechten Ebene durch die Zapfenachse (B) liegen oder an diese angrenzen.

6. Differentialanordnung nach einem der Ansprüche 1 bis 5,
**dadurch gekennzeichnet,**
**daß** die Lagerscheiben (19) kreisscheibenförmig gestaltet sind.

7. Differentialanordnung nach einem der Ansprüche 1 bis 6,
**dadurch gekennzeichnet,**
**daß** die Öffnungen (20) jeweils durch Überdeckung zweier Flächen gebildet sind, von denen eine erste Fläche (32) einen Kreis einbeschreibt und von denen eine zweite Fläche (33) größer ist als eine radiale Projektion der Seitenwellenräder (15, 16).

8. Differentialanordnung nach Anspruch 7,
**dadurch gekennzeichnet,**
**daß** die zweite Fläche (33) in Form eines sich in Umfangsrichtung erstreckenden Schlitzes gestaltet ist.

9. Differentialanordnung nach Anspruch 8,
**dadurch gekennzeichnet,**
**daß** der Differentialkorb (3) einen einstückig angeformten Flansch (10) zur Drehmomenteinleitung aufweist, wobei der Schlitz (33) in Bezug auf eine durch die Zapfenachse (B) aufgespannte Querschnittsebene vom Flansch (10) entfernt angeordnet ist.

10. Differentialanordnung nach einem der Ansprüche 1 bis 9,
**dadurch gekennzeichnet,**
**daß** zwischen der Lagerscheibe (19) und der Öffnung (20) über zumindest einen Umfangsteilabschnitt der Lagerscheibe (19) ein Spalt (38) gebildet ist.

11. Differentialanordnung nach einem der Ansprüche 1 bis 10,
**dadurch gekennzeichnet,**
**daß** die Öffnungen (20) in Bezug auf die Längsmittelebene symmetrisch gestaltet sind.

12. Differentialanordnung nach einem der Ansprüche 1 bis 11,
**dadurch gekennzeichnet,**
**daß** die Öffnungen (20) derart gestaltet sind, daß zwischen einer Umfangsfläche der Lagerscheibe (19) und dem Differentialkorb (3) ein Dreipunktkontakt oder Vierpunktkontakt gebildet ist.

13. Differentialanordnung nach einem der Ansprüche 1 bis 12,
**dadurch gekennzeichnet,**
**daß** genau zwei Ausgleichsräder (14) vorgesehen sind, die auf den Zapfenenden (28) des Zapfens (27) gelagert sind, wobei die Zapfenenden (28) in die Bohrungen (30) der einander gegenüberliegenden Lagerscheiben (19) eingesteckt und gegenüber diesen axial fixiert sind.

14. Differentialanordnung nach einem der Ansprüche 1 bis 13,
**dadurch gekennzeichnet,**
**daß** der Zapfen (27) in einem zentralen Bereich Abflachungen (31) aufweist, in die mit den Seitenwellenrädern (15, 16) antriebsverbindbare Seitenwellen (8, 9) zur Verdrehsicherung eingreifen können.

## Claims

1. A differential assembly (2) in the form of a crown gear differential, more particularly for being used in the driveline of a motor vehicle, comprising
a differential carrier (3) which is produced in one piece, which is rotatingly drivable around an axis of rotation (A) and which, in a casing portion (25), comprises two radial openings (20) for mounting sideshaft gears (15, 16) and differential gears (14),
wherein, in the mounted condition, the sideshaft gears (15, 16) are rotatably held on the axis of rotation (A) in the differential carrier (3) and
wherein the differential gears (14) rotate jointly with the differential carrier (3) around the axis of rotation (A) and meshingly engage the sideshaft gears (15, 16), and
per opening (20), comprising a bearing disc (19) inserted into said opening (20) and having a central bore (30) in each of which there is held a journal end (28) of a bearing journal (27) for a differential gear (14),
**characterised in**
the openings (20) are asymmetric with reference to a cross-sectional plane formed by the journal (27) and extending perpendicularly relative to the axis of rotation (A), and the openings (20) are symmetric relative to the longitudinal central plane.

2. A differential assembly according to claim 1,
**characterised in**
**that,** in webs (26) formed in the circumferential direction between the two openings (20), the differential carrier (3) is kept free from through-apertures.

3. A differential assembly according to claim 1 or 2,
**characterised in**
**that** the bearing discs (19), at least in the circumferential direction of the differential carrier (3), are held in a play-free way relative thereto.

4. A differential assembly according to any one of claims 1 to 3,
**characterised in**
**that,** at each of the openings (20), the differential carrier (3) comprises two supporting faces (34, 35) which are arranged opposite one another in the circumferential direction and with which the associated bearing disc (19) is in contact in a play-free way in the mounted condition.

5. A differential assembly according to claim 4,
**characterised in**
**that** the two supporting faces (34, 35) are positioned on a plane which extends through the journal axis (B) and which is positioned perpendicularly relative to the longitudinal axis (A), or adjoins same.

6. A differential assembly according to any one of claims 1 to 5,
**characterised in**
**that** the bearing discs (19) are circular-disc-shaped.

7. A differential assembly according to any one of claims 1 to 6,
**characterised in**
**that** the openings (20) are formed by two faces overlapping one another, of which a first face (32) circumscribes a circle and of which a second face (33) is greater than a radial projection of the sideshaft gears (15, 16).

8. A differential assembly according to claim 7,
**characterised in**
**that** the second face (33) is provided in the shape of a slot extending in the circumferential direction.

9. A differential assembly according to claim 8,
**characterised in**
**that** the differential carrier (3) comprises an integrally formed-on flange (10) for the introduction of torque, wherein the slot (33), with reference to a cross-sectional plane formed by the journal axis (B), is arranged so as to be remote from the flange (10).

10. A differential assembly according to any one of claims 1 to 9,
**characterised in**
**that** between the bearing disc (19) and the opening (20), there is formed a gap (38) extending over at least one partial circumferential portion of the bearing disc (19).

11. A differential assembly according to any one of claims 1 to 10,
**characterised in**
**that** the openings (20) are designed to be symmetric with reference to the longitudinal central plane.

12. A differential assembly according to any one of claims 1 to 11,
**characterised in**
**that** the openings (20) are designed in such a way that there is formed a three-point contact or a four-point contact between a circumferential face of the bearing disc (19) and the differential carrier (3).

13. A differential assembly according to any one of claims 1 to 12,
**characterised in**
**that** there are provided exactly two differential gears (14) which are supported on the journal ends (28) of the journal (27), wherein the journal ends (28) are inserted into the bores (30) of the opposed bearing discs (19) and are axially fixed relative thereto.

14. A differential assembly according to any one of claims 1 to 13,
**characterised in**
**that,** in a central region, the journal (27) comprises flattened portions (31) which, for anti-rotation purposes, can be engaged by sideshafts (8, 9) which can be drivingly connected to the sideshaft gears (15, 16).

## Revendications

1. Agencement de différentiel (2) sous la forme d'un différentiel à pignons à denture sur chant, notamment destiné à l'utilisation dans une ligne de transmission d'entraînement d'un véhicule automobile, comprenant
une cage de différentiel (3) d'une seule partie, qui peut être entraînée en rotation autour d'un axe de rotation (A), et présente, dans une partie d'enveloppe (25), deux ouvertures radiales (20) pour le montage de pignons ou planétaires d'arbres latéraux (15, 16) et de pignons de compensation ou satellites (14), l'ensemble étant tel que, dans l'état monté, les pignons d'arbres latéraux (15, 16) soient maintenus rotatifs sur l'axe de rotation (A) dans la cage de différentiel (3), et que les pignons de compensation (14) tournent en commun avec la cage de différentiel (3) autour de l'axe de rotation (A) et engrènent avec les pignons d'arbres latéraux (15, 16) ; et
dans chaque ouverture (20), un disque de palier (19) inséré dans celle-ci et comportant un alésage central (30) dans lequel est supportée respectivement une extrémité de tourillon (28) d'un tourillon de palier (27) pour un pignon de compensation (14),
**caractérisé en ce que** les ouvertures (20) sont d'une configuration dissymétrique par rapport à un plan de section transversale défini par le tourillon (27) et perpendiculaire à l'axe de rotation (A), et d'une configuration symétrique par rapport à un plan médian longitudinal.

2. Agencement de différentiel selon la revendication 1,
**caractérisé en ce que** la cage de différentiel (3) est réalisée exempte d'interruptions dans les zones de nervure (26) entre les deux ouvertures (20) en direction périphérique.

3. Agencement de différentiel selon la revendication 1 ou 2,
**caractérisé en ce que** les disques de palier (19) sont maintenus sans jeu par rapport à la cage de différentiel (3) au moins dans la direction périphérique de celle-ci.

4. Agencement de différentiel selon l'une des revendications 1 à 3,
**caractérisé en ce que** la cage de différentiel (3) présente au niveau de chacune des ouvertures (20), deux surfaces d'appui (34, 35) opposées dans la direction périphérique, contre lesquelles vient s'appuyer sans jeu, dans l'état monté, le disque de palier (19) associé.

5. Agencement de différentiel selon la revendication 4,
**caractérisé en ce que** les deux surfaces d'appui (34, 35) se situent dans un plan perpendiculaire à l'axe longitudinal (A) et passant par l'axe de tourillon (B), ou sont adjacentes à ce plan.

6. Agencement de différentiel selon l'une des revendications 1 à 5,
**caractérisé en ce que** les disques de palier (19) sont d'une configuration en forme de disque circulaire.

7. Agencement de différentiel selon l'une des revendications 1 à 6,
**caractérisé en ce que** les ouvertures (20) sont formées chacune par le recouvrement ou la réunion de deux surfaces, dont une première surface (32) décrit un cercle et dont une deuxième surface (33) est plus grande qu'une projection radiale des pignons d'arbres latéraux (15, 16).

8. Agencement de différentiel selon la revendication 7,
**caractérisé en ce que** la deuxième surface (33) est d'une configuration en forme de fente s'étendant dans la direction périphérique.

9. Agencement de différentiel selon la revendication 8,
**caractérisé en ce que** la cage de différentiel (3) présente un flasque (10) formé d'un seul tenant avec la cage et destiné à assurer l'application du couple d'entrée, la fente (33) étant agencée de manière éloignée du flasque (10) par rapport à un plan de section transversale passant par l'axe de tourillon (B).

10. Agencement de différentiel selon l'une des revendications 1 à 9,
**caractérisé en ce qu'**entre le disque de palier (19) et l'ouverture (20) est formé un interstice (38) sur au moins un tronçon périphérique partiel du disque de palier (19).

11. Agencement de différentiel selon l'une des revendications 1 à 10,
**caractérisé en ce que** les ouvertures (20) sont de configuration symétrique par rapport au plan médian longitudinal.

12. Agencement de différentiel selon l'une des revendications 1 à 11,
**caractérisé en ce que** les ouvertures (20) sont conçues de façon à former entre une surface périphérique du disque de palier (19) et la cage de différentiel (3), un contact en trois points ou un contact en quatre points.

13. Agencement de différentiel selon l'une des revendications 1 à 12,
**caractérisé en ce que** sont prévus exactement deux pignons de compensation (14) qui sont montés sur les extrémités de tourillon (28) du tourillon (27), les extrémités de tourillon (28) étant insérées dans les alésages (30) des disques de palier (19) mutuellement opposés en étant fixées axialement par rapport à ceux-ci.

14. Agencement de différentiel selon l'une des revendications 1 à 13,
**caractérisé en ce que** dans une zone centrale, le tourillon (27) présente des méplats (31) dans lesquels peuvent venir s'engager des arbres latéraux (8, 9) pouvant être reliés sur le plan de l'entraînement aux pignons d'arbres latéraux (15, 16), en vue d'un arrêt de rotation relative.
